Europäisches Patentamt

European Patent Office

Office européen des brevets

(11) Publication number: 0 248 380
A2

# EUROPEAN PATENT APPLICATION

(21) Application number: 87107897.8

(22) Date of filing: 01.06.87

(51) Int. Cl.4: G05D 23/19 , F24F 11/00

(30) Priority: 02.06.86 US 869271

(43) Date of publication of application:
09.12.87 Bulletin 87/50

(84) Designated Contracting States:
DE GB NL SE

(71) Applicant: Johnson Service Company
5757 North Green Bay Avenue
Milwaukee Wisconsin 53209(US)

(72) Inventor: Heckenbach, Terry A.
57228 County Road 33
Middlebury Indiana 46540(US)

(74) Representative: Henkel, Feiler, Hänzel &
Partner
Möhlstrasse 37
D-8000 München 80(DE)

(54) Apparatus for controlling a variable air volume unit.

(57) An apparatus for controlling a variable air volume unit includes an electrical supply for powering the apparatus and a microcomputer for controlling its operation. Multiplexing means is connected to the microcomputer and to a plurality of first input terminals for providing a group of first signals which are representative of the values of sensors connected to the terminals. The multiplexing means is also connected to a plurality of second input terminals for providing a group of signals representative of the values of set point potentiometers. An analog-to-digital converter is connected to the microprocessor for providing digital data signals thereto while an output section controls the VAV unit. The sensors include at least one sensor for indicating the flow rate of air being discharged from the unit while the potentiometers include a first potentiometer disposed remotely from the apparatus for setting a temperature to be maintained within a space.

EP 0 248 380 A2

FIG. 1

## APPARATUS FOR CONTROLLING A VARIABLE AIR VOLUME UNIT

This invention relates to electrical process controllers generally and more particularly, to an apparatus for controlling a variable air volume unit within a heating, ventilating and air conditioning (HVAC) system.

Historically, commercial and industrial office buildings have used HVAC systems in conjunction with one or more air handling units for directing a flow of air to a plurality of ducts, each duct having one or more terminations in the ceiling of the occupied space. These systems included heater and chiller coils for, respectively, adding heat to or removing heat from the circulated air, thereby modulating the temperature of air flowing into the occupied space. The rate of flow being discharged from the ceiling vents into a particular space was maintained substantially constant with the space temperature being controlled by controlling air temperature.

More recently, it has been found that significant savings in the amount of energy consumed to effect temperature control may be realized by the obverse, i.e., by maintaining the temperature of the discharged air at a substantially constant value and effecting temperature control by varying the flow rate of the air being discharged into the space. The duct-like boxes which are installed above room ceilings for this purpose include flow-regulating dampers and may also include individual chiller and/or heater devices, the latter being capable of making incremental changes in air temperature for the particular space being conditioned. Devices such as the foregoing are usually called variable air volume or VAV units.

These VAV units require a control strategy which is distinctly different from that employed in the older, constant volume systems. An example of one type of a controller useful with a VAV unit is shown and described in United States Letters Patent No. 4,543,796. The scheme described therein uses a primary control algorithm for normally regulating the temperature of air being discharged into a zone and a secondary algorithm to temper the discharged air if air temperature established by the primary algorithm has been predetermined to likely result in discomfort for most persons. The second algorithm governs only if certain pre-conditions are met and some sacrifice in the proximity of actual room temperature to setpoint temperature will often result.

Another controller used for VAV units is shown and described in United States Letters Patent No. 4,540,118 and employs means for spraying water into air moving through a chamber so that this air may be substantially saturated and subsequently adjusted to a desired temperature. Both temperature and humidity can thereby be controlled.

While these devices have heretofore been satisfactory, they have failed to appreciate the manner of providing an integrated, versatile microprocessor-based controller which is capable of monitoring a plurality of sensors, comparing the values represented by these sensor signals with the values established by, for example, a plurality of set point potentiometers and controlling the operation of the VAV unit in response thereto.

## SUMMARY OF THE INVENTION

In general, an apparatus for controlling a variable air volume unit includes an electrical supply for powering the apparatus and a microcomputer for controlling its operation. Multiplexing means is connected to the microcomputer and to a plurality of first input terminals for providing a group of first signals which are representative of the values of sensors connected to the terminals. The multiplexing means is also connected to a plurality of second input terminals for providing a group of signals representative of the values of set point potentiometers. An analog-to-digital converter is connected to the microprocessor for providing digital data signals thereto while an output section controls the VAV unit. The sensors include at least one sensor for indicating the flow rate of air being discharged from the unit while the potentiometers include a first potentiometer disposed remotely from the apparatus for setting a temperature to be maintained within a space.

It is an object of the present invention to overcome the disadvantages of earlier types of VAV control apparatus.

Another object of the invention is to provide a control apparatus capable of monitoring a plurality of system sensors.

Yet another object of the invention is to provide a control apparatus which may monitor at least one sensor indicating the flow rate of air being discharged from a VAV unit.

Still another object of the invention is to provide a VAV control apparatus which is capable of stand alone operation or which may be coupled by a digital communication bus to a supervisory computer.

How these and other objects are accomplished will become more apparent from the detailed description of the inventive control apparatus taken in conjunction with the accompanying drawing.

DESCRIPTION OF THE DRAWING

FIGURE 1 is a simplified cross-sectional side elevation view of a variable air volume unit with which the inventive apparatus may be used;

FIGURES 2 and 3, taken together, depict that portion of the apparatus which includes its power supply;

FIGURES 4 and 5, taken together, depict that portion of the apparatus which includes its sensor input, setpoint, analog-digital conversion and multiplexing sections;

FIGURES 6 and 7, taken together, depict that portion of the apparatus which includes its binary input, sanity reset and microcomputer sections;

FIGURES 8 and 9, taken together, depict that portion of the apparatus comprising the output section including its driver portion;

FIGURE 10 is a graphical trace representation of certain described characteristics of the sanity reset section depicted in FIGURES 6 and 7;

FIGURE 11 is a graphical trace representation of certain described pulses used to control the driver portion depicted in FIGURES 8 and 9, and;

FIGURE 12 is a comparative graphical trace representation of the manner of controlling the analog voltage portion of the output section depicted in FIGURES 8 and 9.

DESCRIPTION OF THE PREFERRED EMBODIMENTS

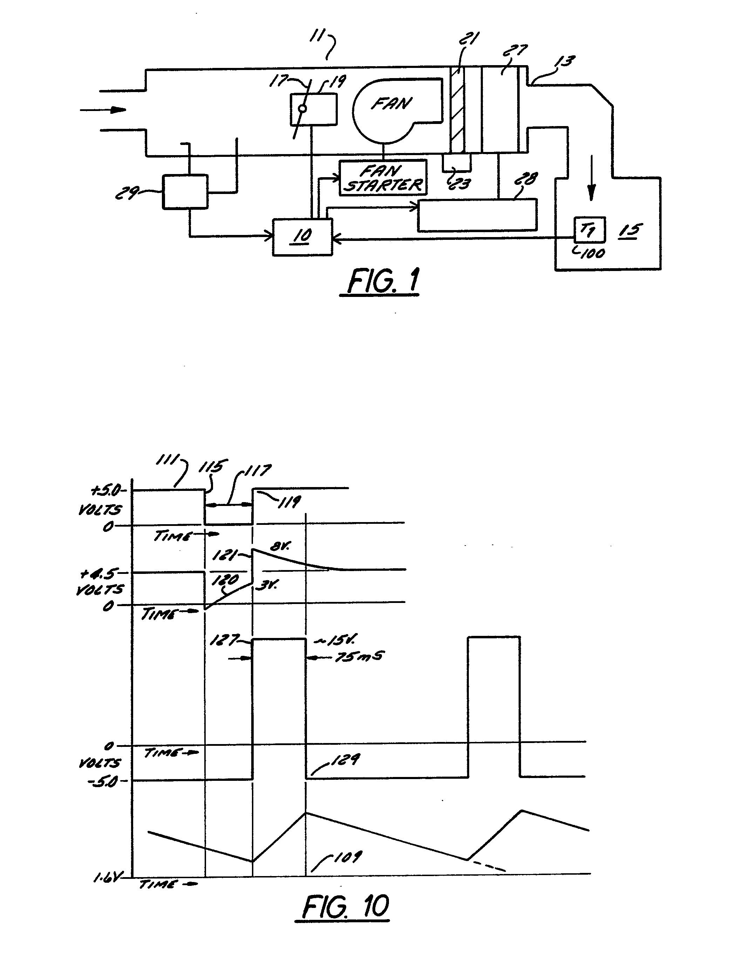

Referring first to FIGURE 1, the apparatus 10 is shown in conjunction with a variable air volume (VAV) unit 11, the latter comprising a section of duct 13 for flowing air therethrough into a space 15 and a damper 17 to which is coupled an actuator 19 for positioning the damper 17 in a continuum between its fully opened and fully closed positions. While such actuators are sometimes embodied as pneumatic cylinders, a preferred actuator 19 for use with the apparatus 10 comprises a small bi-directional electric motor, perhaps with integral gear reducer, for attachment to the operating mechanism of the damper 17. The unit 11 may also include its own chiller coil 21 and positionable coil valve 23 which is capable of being modulated by an electrical signal to vary the flow of chilled water through the coil 21 over a predetermined flow range. The unit 11 may also include a re-heater coil and control valve (not shown) which, when electrically controlled, modulates the flow rate of heated water passing through the coil. In the alternative and more commonly, the coil may be replaced by one or more electrical resistance heaters 27 which, when energized by a solid state relay 28 or the like, adds heat to the air passing over the heater(s) 27 and into the space 15.

A typical unit 11 also includes a sensor 29 which permits a determination of the flow rate of air being discharged from the unit 11. A preferred sensor 29 is embodied as a differential pressure transmitter available from Johnson Controls, Inc. of Milwaukee, Wisconsin, its model P 560B. This transmitter is shown and described in United States Patent application serial no. 718,745, filed 1 April 1985, titled "Differential Pressure Transmitter" and incorporated herein by reference.

The inventive apparatus 10 shares certain similarities with that shown in United States application serial number 629,086 titled "Zone Condition Controller and Method of Using Same" which is assigned to the same assignee as this invention. However, the apparatus of the noted application and that of this instant application are different in several respects. More specifically, the earlier controller is configured to control a plurality of air handling units of the older variable air temperature/constant air flow type. It effects control by transmitting digitally coded signals along a two-wire bus to a plurality of microprocessor based control devices located remotely therefrom. The instant apparatus 10 is configured to permit its attachment directly to a VAV unit 11 being controlled and includes power output devices for directional operation of a motorized actuator 19, valve 23 and the like.

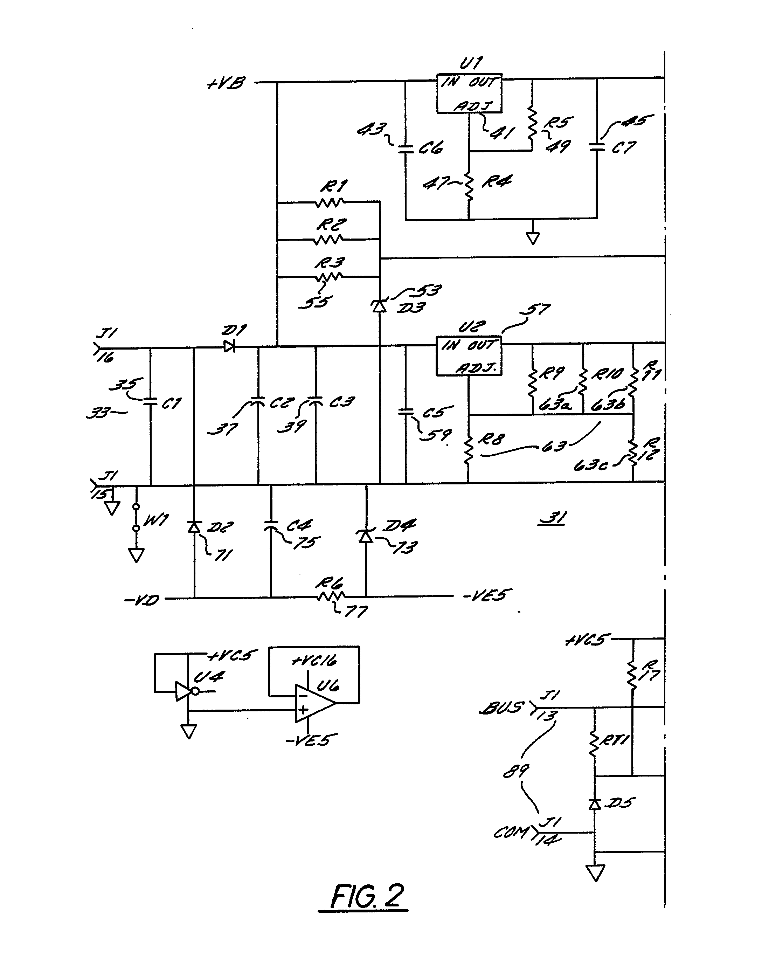

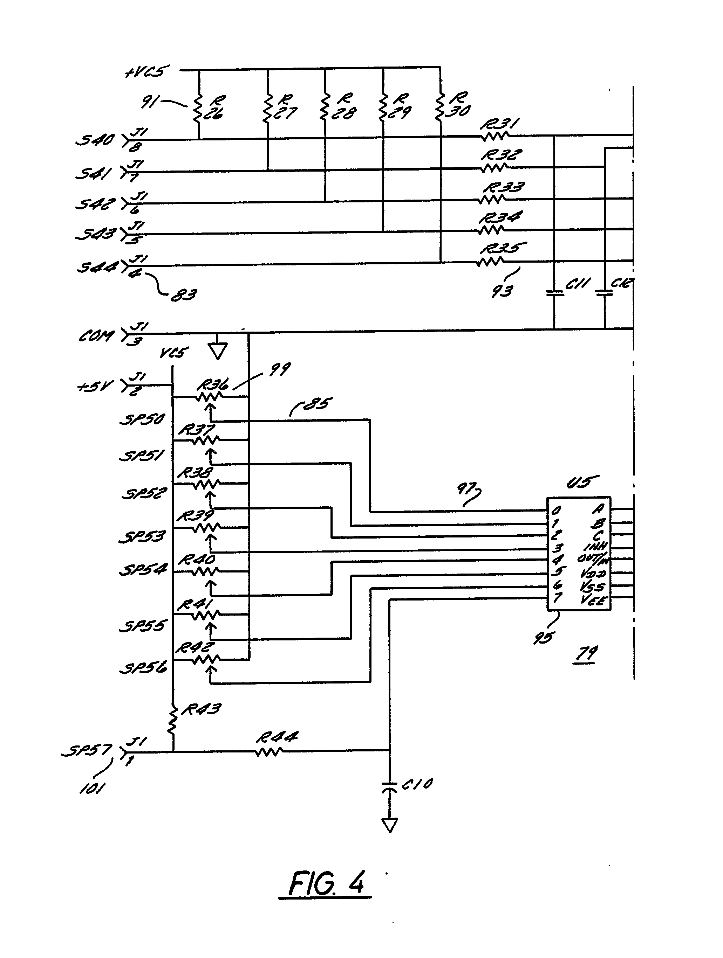

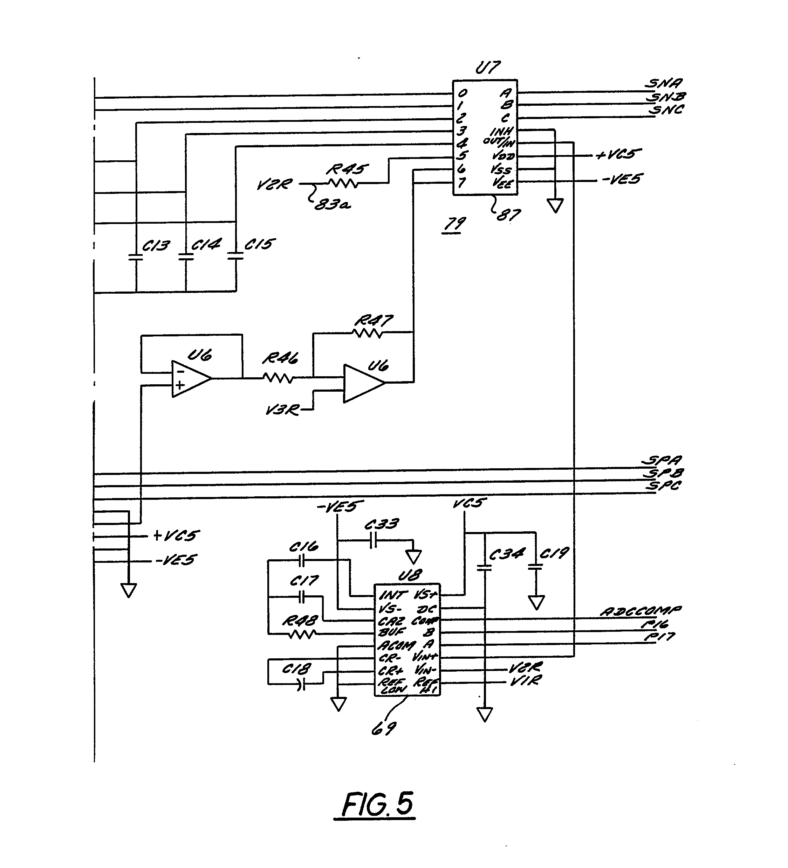

Referring next to FIGURES 2, 3, 4 and 5, the apparatus 10 includes an electrical supply 31 for providing power to the apparatus 10 at a plurality of voltages. The supply 31 includes an input section 33 having a capacitor 35 for voltage transient suppression and a capacitor 37 as the main source of positive voltage power. A capacitor 39 may be used in lieu of the capacitor 37 if the apparatus 10 is to operate under reduced power requirements as, for example, when only two of the outputs described below are required. The regulator 41, capacitors 43 and 45 and resistors 47, 49 define an analog supply which provides a

3

regulated output voltage of nominally +22.4 VDC for powering an analog voltage output section 51 as described in greater detail following. The diode 53 and resistors 55 define a +16 VDC Zener supply and it has been found that the use of three resistors 55 will involve slightly lowered manufactured costs as compared to a single resistor of a greater heat dissipating capacity.

The regulator 57, the capacitors 59, 61 and the resistors 63 define a +5 VDC supply wherein any combination of resistors 63a, b, c, can be removed to trim the value of this voltage to 5.00 volts within ± 1%. The resistors 65 and filter capacitor 67 define a voltage divider network for powering an analog-to-digital converter 69 while the diodes 71, 73, the capacitor 75 and the resistor 77 define a -5 VDC Zener diode supply.

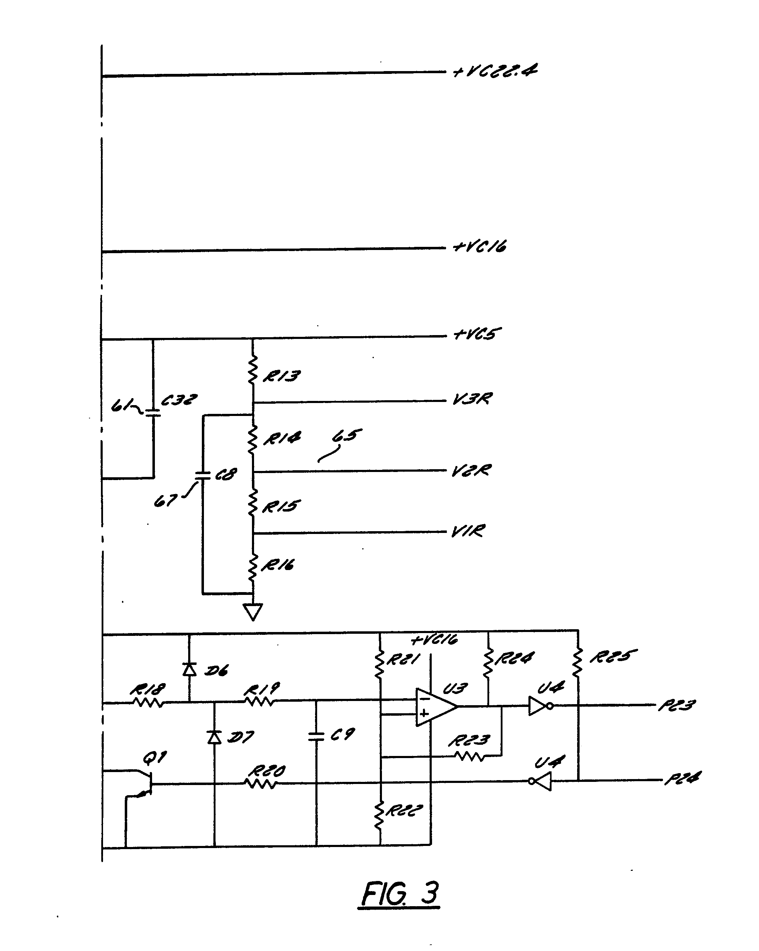

A preferred apparatus 10 will be capable of functioning in either of two modes, i.e., as a fully operational stand-alone controller or as a controller which may be connected in parallel with up to several dozen other controllers to a two-wire digital communication bus, thereby permitting plural control apparatus 10 to be networked for supervision and control by a computer (not shown) at a higher hierarchical level. This computer would be capable of monitoring the sensor and setpoint values of each apparatus 10 coupled thereto and by addressed or global command signals could effect certain changes in the sensor and setpoint values, alter binary information, perform energy management functions or the like. FIGURES 2 and 3 illustrate a noise-neutralizing interface circuit for permitting the apparatus to be coupled to such a communication bus. This circuit is one of the embodiments shown and described in United States Letters Patent No. 4,504,959, titled "Noise-Neutralizing Digital Interface Circuit" and assigned to the same assignee as this invention.

Referring next to FIGURES 1, 2, 4, 5, 6 and 7, the apparatus 10 also includes multiplexing means 79 connected to a microcomputer 81 and to a plurality of first input terminals 83 and second input terminals 85 for providing signals to the microcomputer 81. More specifically, the multiplexing means 79 includes a first multiplexer 87 connected between the microcomputer 81 and a plurality of sensor input terminals 83. These terminals 83 are connectable to analog sensors which may include a first sensor for indicating the flow rate of air being discharged from the unit 11 and a second sensor for indicating the air temperature within the space 15. A preferred first sensor is the differential pressure transmitter as previously described. The first sensor input terminals 83 preferably comprise five in number for maximum flexibility of application of the apparatus 10 while a sixth input terminal 83a defines an internal input to the first multiplexer 87 and is also connected to detect the reference voltage V2R which is applied to the analog-digital converter 69. It is to be appreciated that any sensor can be embodied as one of two types. The first, a passive sensor preferably of the silicon type, will exhibit a resistance indicative of its temperature and resolvable to an equivalent voltage. The second type is preferably embodied as an active sensor requiring a power supply and manifesting a voltage signal relating to the parameter being sensed, e.g., temperature, humidity, pressure or the like. The provision of the reference voltage to the first multiplexer 87 permits active sensor output voltages to be correctable to true zero by subtracting the value of the reference voltage from each sensor signal. A preferred sensor will have a nominal voltage output range of 1 VDC - 2 VDC over the full range of the parameter to be sensed and an example of one such sensor is a precision silicon sensor, Amperex No. KTY81B1, while other suitable temperature sensors are available from Johnson Controls, Inc. under their catalog nos. A960 and T960. Such sensors will typically have a voltage output over the indicated voltage range for a corresponding temperature range of -40° F. to 216° F. The following tables set forth nominal values and value ranges for sensor calibration.

## TABLE 1

### PASSIVE TEMPERATURE SENSORS

### RANGE: -40 to 216° F.

| INPUT OHMS | NOMINAL VALUE, | DATA AVAILABLE ON BUS, °F. | | |
|---|---|---|---|---|
| Rt | deg. F. | MINIMUM | NOMINAL | MAXIMUM |
| less than 500 | Short | LO | LO | LO |
| 626 | -32 | -33.88 | -32.00 | -30.13 |
| 1070 | 85 | 84.00 | 85.00 | 86.00 |
| 1700 | 207 | 204.63 | 207.00 | 209.38 |
| greater than 1850 | Open | HI | HI | HI |

## TABLE 2

### ACTIVE SENSOR

### RANGE: 0 to 130 units

| INPUT RATIO | NOMINAL VALUE, | DATA AVAILABLE ON BUS | | |
|---|---|---|---|---|
| | | MINIMUM | NOMINAL | MAXIMUM |
| less than 17.73% | Short | LO | LO | LO |
| 21.249% | 0.04 | 3.11 | 4.06 | 5.01 |
| 31.563% | 0.64 | 62.97 | 63.48 | 63.98 |
| 42.289% | 1.25 | 124.23 | 125.43 | 126.64 |
| greater than 44.36% | Open | HI | HI | HI |

The nominal values of Table 2 are in units of inches water column as would result from the use of the aforementioned P560 pressure transmitter. The units of the values available on the digital communication bus terminals 89 are in inches water column X100 to permit satisfactory pressure resolution. Table 2 is therefore exemplary of only one type of active sensor which may be used with a VAV unit 11.

If humidity in the space 15 is also being controlled, each apparatus 10 which forms a part of a larger network will also be equipped with a relative humidity sensor or transmitter which is disposed in the unit 11 and which will have a voltage output over the indicated voltage range for a corresponding range of relative humidity of 0% to 100%. A plurality of reference resistors 91 are provided to linearize the output voltage of silicon sensors of a type most commonly used. Each sensor input terminal 83 is provided with a resistor-capacitor filter network 93 for attenuating electrical noise as the sensor signals are directed to the first multiplexer 87. In order to provide less than 1.0° F. error in the sensor signals, the total resistance of the wiring for each sensor should preferably be less than 3.0 ohms. On wiring runs greater than 50 ft. in length, shielded cable is preferred.

A second multiplexer 95 is connected between the microcomputer 81 and a plurality of setpoint input pins 97 connected to setpoint potentiometers 99 which may include a first potentiometer 100 for setting a temperature to be maintained within a space and a second potentiometer for adjusting the minimum flow rate of air to be discharged from the unit. Other potentiometer settings may provide setpoints for maximum velocity pressure, proportional bandwidth in degrees, width of deadband (in degrees) when neither heating nor cooling is to occur, remote zone temperature and the like. While these potentiometers may be remotely located, in a preferred embodiment of the apparatus and with the possible exception of the first potentiometer 100, they are integral thereto so that the apparatus may be self-contained and operate in a stand-alone mode. An additional terminal 101 is provided to accommodate connection of the first potentiometer 100 which is usually disposed within the space 15 and which may be adjusted by the occupant.

An analog-digital converter 69 is under the real time control of the microcomputer 81 and is capable of four different modes of operation, namely, auto-zero, integrate signal, integrate reference and zero integrator. A suitable analog-digital converter 69 is available from Teledyne Semiconductor, its part no. TSC500. The time controlled operation of these modes can, by appropriate software, be optimized for apparatus 10 to be connected to an AC power line of either 50 Hz or 60 Hz. For each mode, integration of analog values may be accomplished over a predetermined fraction of a second, the denominator of the fraction being equal to the power line frequency in Hertz and the numerator of the fraction being an integer significantly smaller than the line frequency, thus:

| Mode | 50 Hz | 60 Hz |
| --- | --- | --- |
| 0 zero integrate | 1/50 sec. | 1/60 sec. |
| 1 auto zero | 1/50 sec. | 1/60 sec. |
| 2 signal integrate | 2/50 sec. | 2/60 sec. |
| 3 reference integrate | 4/50 sec. | 4/60 sec. max. |

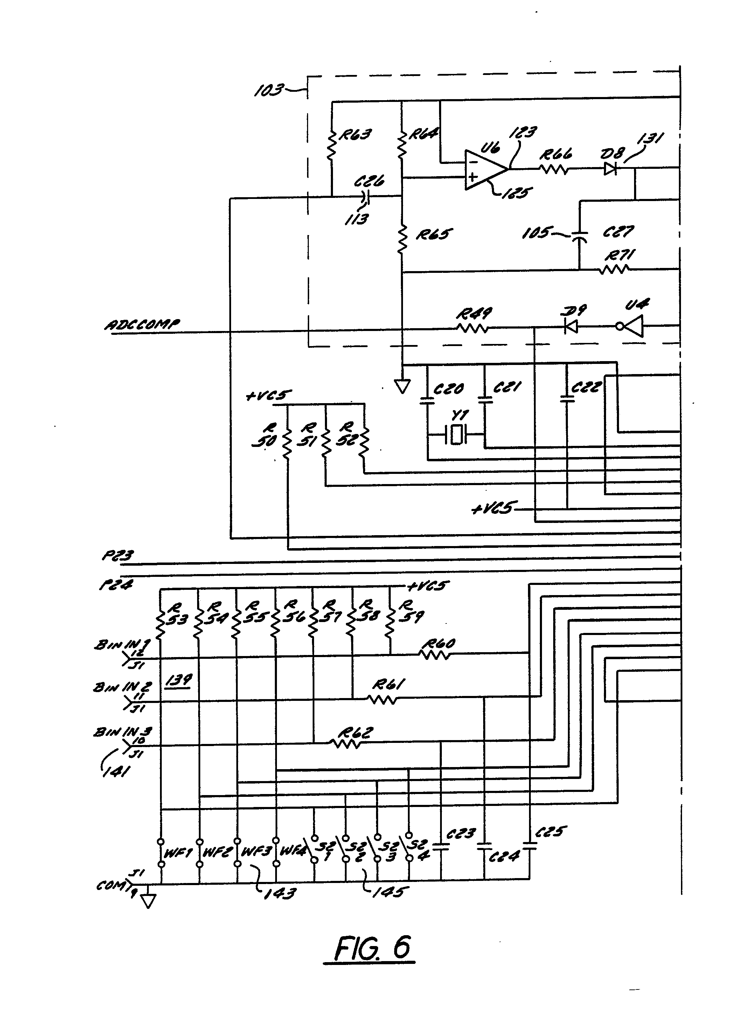

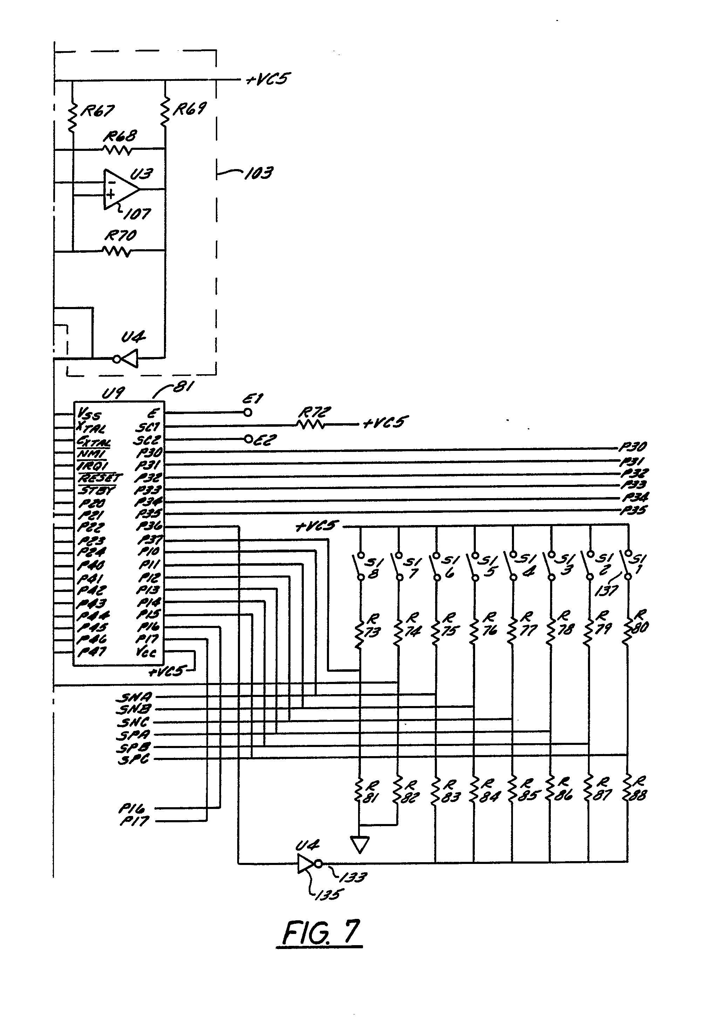

Referring next to FIGURES 6 and 7 a microcomputer 81 has an input capture or timing register used to control the converter 69. When analog conversion is completed as to a particular sensed value, the pin COMP on the converter 69 is toggled and the then-existing value of the free running counter within the microcomputer 81 is latched into the register independent of the other tasks which may simultaneously be executed by the microcomputer 81. In a 60 Hz system, the duration of the reference integration may be 4/60 second maximum, the actual duration of this integration will be directly proportional to the value of the analog signal being converted. It is to be appreciated that the operating speed of the clock constructed within the microcomputer 81 will govern the accuracy of resolution and in the described embodiment, the minimum increment of resolution is 0.8 microsec. for the selected frequency of crystal Y1.

Referring to FIGURES 6, 7 and 10, the apparatus 10 also includes what may be termed a sanity reset circuit 103, the operation of which is as follows. When power is first applied, the capacitor 105 is discharged and brings the terminal RESET of microcomputer 81 to logic 0, thereby causing the microcomputer to be held in reset. The capacitor 105 will thereafter commence charging and when its charge voltage reaches the logic 1 threshold of comparator 107, about 3.3 volts, the microcomputer 81 will be released from reset and commence operation. The capacitor 105 will thereupon commence discharging. If its voltage declines to the logic zero threshold, axis 109 representing about 1.6 volts, the microcomputer 81 will again reset, ceasing operation. To prevent this, the microcomputer 81 must be caused to generate a periodic pulse which recharges the capacitor 105 to maintain its voltage above this threshold. This pulse is generated only after a successful self test by the microcomputer. As represented by trace 111, the initial voltage on the negative terminal of the capacitor 113 is approximately +5 VDC. The negative pulse on the negative terminal of the capacitor 113, represented by trace 115, is generated by the microcomputer 81, has a duration of about 66 millisec. as represented by arrow 117 and causes a charge to accumulate on the capacitor 113 as represented by trace 120. With the circuit components having the values shown, the capacitor 113 will charge to about +3 VDC. When the negative terminal of capacitor 113 returns to +5 VDC at the termination of the pulse, trace 119, the voltage on the positive terminal of the capacitor 113, represented by trace 121, will exceed +5 VDC, thereby causing the pin 123 of the comparator 125 to switch to about +15 VDC represented by trace 127. This pin 123 will be maintained at this voltage until the positive terminal of the capacitor 113 discharges to a value below about +5 VDC, a duration of about 75 millisec., whereupon the pin 123 returns to about -5 VDC as represented by trace 129. At those times when the pin 123 of the comparator 125 is at its high voltage, the diode 131 is conducting to rapidly recharge the capacitor 105. If a fault occurs within the microcomputer 81 which prevents the sanity pulse from being generated approximately every second, the capacitor 105 will discharge to less than approximately +1.6 VDC and the microcomputer 81 will thereby be reset. Shortly after reset, the pin 133 of inverter 135 is switched to logic 0, the terminals P10-P15 of microcomputer 81 are configured as input terminals and the positions of the switches 137, nos. 1-6, are detected by the microcomputer 81. These switches 137 are manually settable,

6

closed for logic "1" and open for logic "0", for establishing the digitally coded address of a particular apparatus 10 in the event two or more apparatus 10 are coupled by the communication bus terminals 89 to a higher level supervisory computer. Thereafter, the pin 133 is switched to logic 1 and the terminals P10-P15 are used to control multiplexer addressing.

A preferred apparatus 10 also includes means 139 for receiving binary status signals and as shown in FIGURE 6, means 139 is embodied as a plurality of binary input terminals 141 for receiving signals indicative of, for example, the occupied or unoccupied status of a zone or system shutdown. While the circuit of FIGURE 6 includes both jumpers 143 and switches 145, these are to be constructed and used in the alternative for selection of the applied line voltage frequency and of the manner of application, i.e., heating and cooling with one or plural stages of heat, cooling only, constantly running fan when the space is equipped with a remote heater and when occupied or a recirculating fan as a first stage and modulated heating as the second.

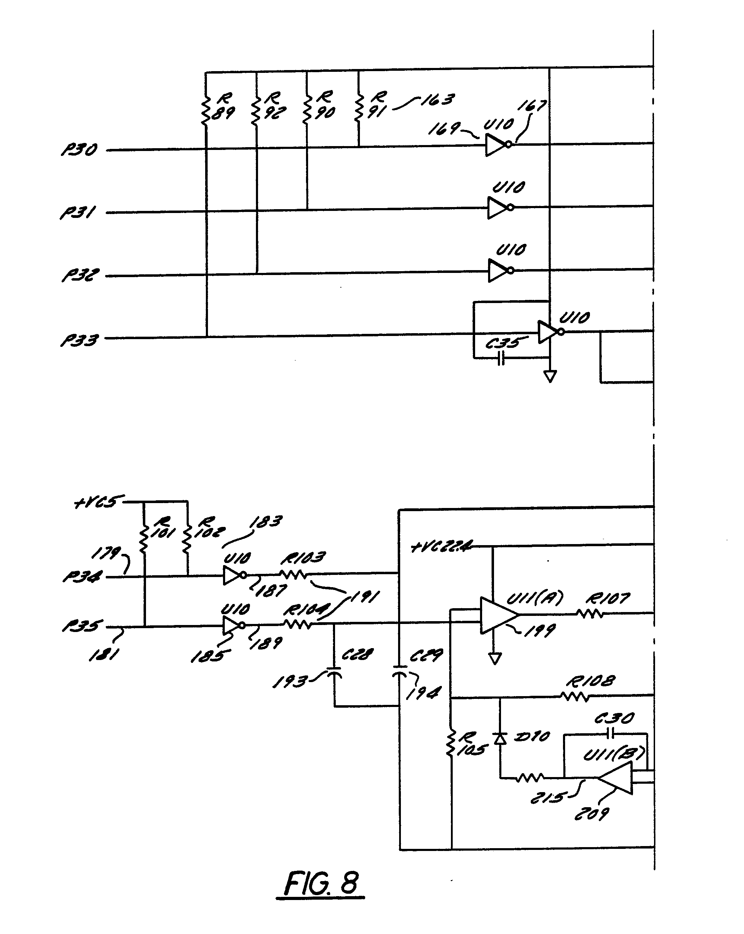

Referring next to FIGURES 1, 8 and 9, the apparatus 10 also includes an output section 147 for controlling the VAV unit 11. In a preferred embodiment, the output section 147 will include two terminals 149, 151 in an analog voltage portion 153 to provide analog voltage outputs and a driver portion 155 with up to four power triacs 157 for load powering. In the alternative, one triac 157 may be replaced by a current source utilizing a transistor 159 for operating a solid state relay connectable to the terminal 161.

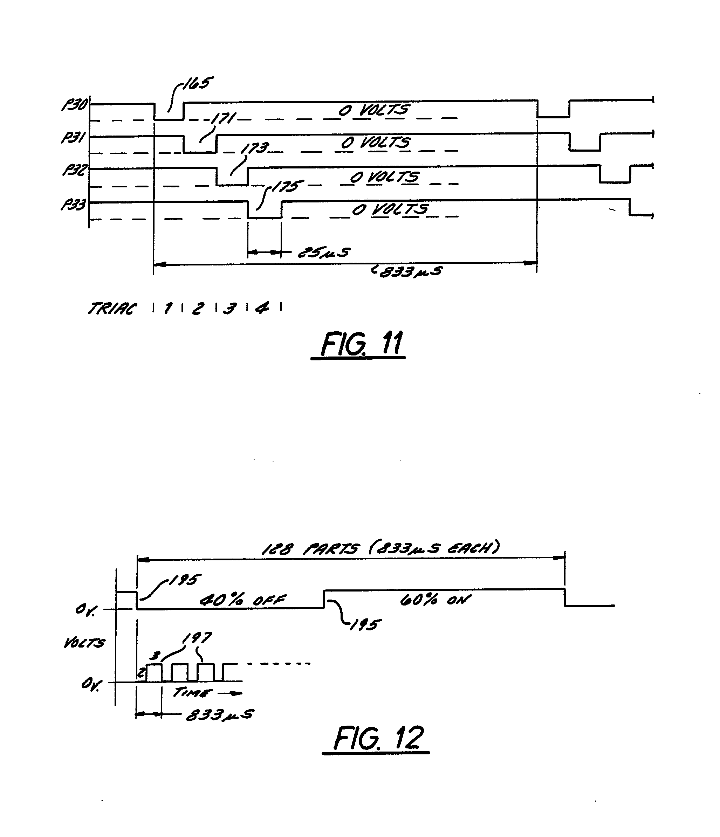

More particularly, the triacs 157 are maintained in a nonconducting state during reset by the pull-up resistors 163. Since each triac 157 requires approximately 20 mA of gate current to switch it to a conducting state, the use of four triacs 157 would normally require an aggregate of approximately 80 mA. To reduce this current requirement and the resulting power loss and heat, the triacs 157 are gated to a conducting state by applying brief but frequent pulses. Referring additionally to FIGURES 1 and 11, and as an example, the microcomputer 81 will provide a negative pulse at terminal P30 which is of a duration of approximately 25 microsec. and which is represented by trace 165. The pin 167 of inverter 169 thereupon generates a positive voltage pulse for the same duration, thereby delivering approximately 20 mA to the gate of triac Q4. Once gated to a conducting state, the triac Q4 will continue to conduct until the triac load voltage next becomes equal to zero. Other pulses may be provided at terminals P31-P33 as represented by traces 171, 173 and 175 respectively and applied to the gates of other triacs 157 in succession. If all triacs are to be maintained in a conducting state, a pulse will be applied to the gate of each in sequence and once every approximately 833 microsec. Therefore, the average current demand required to maintain all four triacs 157 in a conducting state is 25/833 x 4 x 20 mA = 2.4 mA, a substantial reduction in the level of gating current which would otherwise be required. Two triacs 157 may be used, for example, to drive a motorized damper 17 toward the open and closed positions and if the VAV unit 11 includes a chiller coil 21 and motorized control valve 23, two additional triacs 157 may be used for valve positioning.

If the transistor 159 is used as a current output portion 177, it will provide a maximum output current of about 20 mA and is switched in pulse width modulation fashion over a time base of approximately two seconds which is resolved by the microcomputer 81 to 128 parts of about 15 milisec. each. This current output will be available at the terminal 161 for that fraction of the time base which corresponds to the demand for heat. For example, if it is required that an integral resistance heater within the VAV unit 11 is to be energized on a 75% duty cycle to provide the proper temperature of air being discharged from the unit 11, the current will be available at the terminal 161 for a total of approximately 1.5 seconds out of each two seconds.

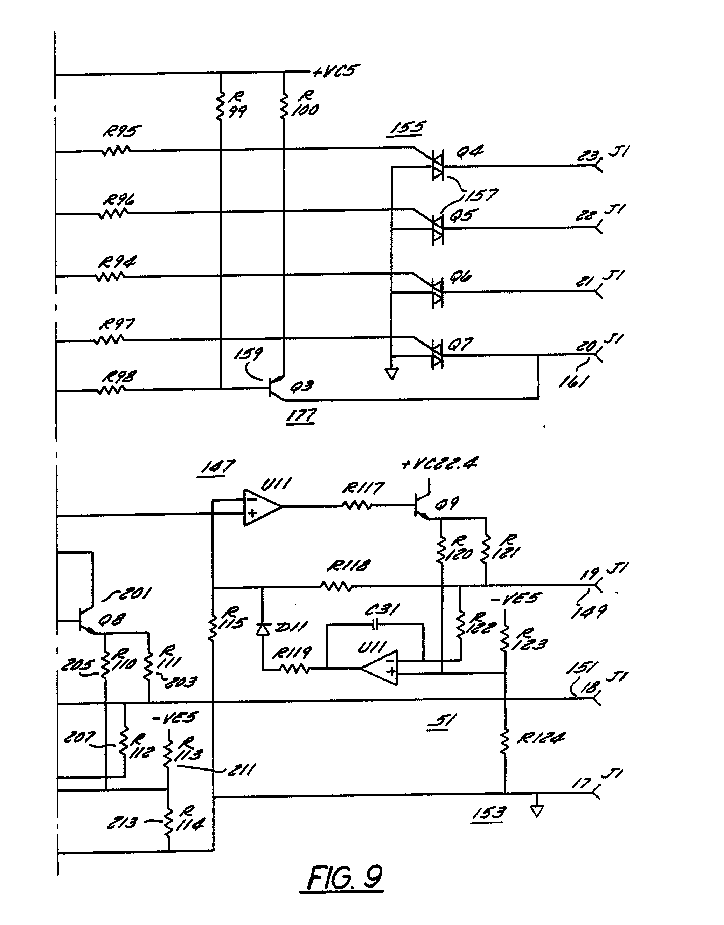

Referring to FIGURE 9, an analog voltage portion 153 is provided to effect an analog voltage output over the range of 0-18 VDC and at a maximum current of 36 mA. The magnitude of the output voltage available at terminals 149 or 151 is determined by a pulse width modulation effected by the microcomputer 81 and applied to the terminals 179 and/or 181 respectively, and the outputs from the inverters 183, 185 pins 187 and/or 189 respectively are averaged by the associated resistors 191 and capacitors 193, 194. It is to be appreciated that the range of 0-18VDC is exemplary and analog voltage outputs having other ranges, e.g., 0-10VDC could be constructed using the specification teaching. This output may be used to drive a proportional valve or the like.

FIGURE 12 comparatively illustrates the manner of controlling the analog voltage portion 153 of the output section 147 by conventional pulse width modulation and by the preferred optimized time based switching. In both instances, approximately a 0.1 second time base is used for illustration. The trace 195 represents the manner of employing conventional pulse width modulation over the time base resolved to 128 parts of 833 microsec. each and in the representation is responsive to a command for 60% "on" time and 40% "off" time. To accomplish this, the capacitor 193 would be charging for 0.6 (128) = 77 counts or 77 x 833 microsec. = 64 millisec and discharging for 0.4 (128) = 51 counts = 51 x 833 microsec = 42.5 millisec, the total of 64 and 42.5 being about 0.1 second. In contrast and with the optimized time base switching, the trace 197 represents that the capacitor 193 will charge for 3 counts = 3 x 833 microsec. = 2.5 millisec (the "on" time) and will discharge for 2 counts = 2 x 833 microsec = 1.6 millisec (the "off" time). In the latter instance, the switching frequency has been increased by 25 times compared to that used with conventional pulse width modulation. The result is that the voltage appearing on the capacitor 193 and amplified by the amplifier 199 to drive transistor 201 has a much lower AC component.

It will also be noted that the emitter of transistor 201 is coupled through a resistor 203 to the output terminal 151. The current being delivered to the external load results in a voltage drop across the resistor 203 which is sampled by resistors 205, 207 and compared by comparator 209 to a maximum voltage level established by the values of the resistors 211 and 213. When the load current is excessive, the pin 215 of comparator 209 switched to a logic "1", thereby causing the amplifier 199 to decrease its output drive. The output current thereupon decreases and is maintained below its maximum value so long as the overload exists. This current foldback feature protects the transistor 201 from damage in the event of a short circuit or other overload at the output device. Normal function is restored when the overload is removed.

The following components have been found useful in constructing the invention and resistances are in ohms, capacitors are in microfarads unless otherwise indicated.

## FIGURES 2 and 3

| | |
|---|---|
| C1 | 0.1/250V |
| C2 | 1500/150V |
| C3 | 330/50V |
| C4 | 47/50V |
| C5, C6, C7, C8, C32 | 0.1/50V |
| C9 | 470pF/50V |

| | |
|---|---|
| D1, D2, D5 | 1N5060 |
| D3 | 1N4745 |
| D4 | 1N4734 |
| D6, D7 | 1N4148 |
| Q1 | 2N5822 |
| R1, R2, R3 | 2.7K |
| R4 | 4.12K/1% |
| R5, R9 | 243/1% |
| R6 | 3.9K |
| R8 | 732/1% |
| R10 | 6.8K |
| R11 | 12K |
| R13 | 2.67K/.1% |
| R14 | 90.9/.1% |
| R15 | 1.06K/.1% |
| R16 | 229/0.1% |
| R17, R25 | 47K |
| R18, R24 | 10K |
| R19 | 330K |
| R20 | 1K |
| R21, R22, R23 | 69.8K/1% |
| U1, U2 | LM317T |
| U3 | CA3290 |
| U4 | 74HC04 |
| U6 | LM324 |

FIGURES 4 and 5

| | |
|---|---|
| C10 | 1/50V LL |
| C11, C12, C13, C14 C15, C19, C33, C34 | 0.1/50V |
| C16 | 0.15/100V |
| C17 | 0.33/100V |
| C18 | 10/25V LL |

9

| | |
|---|---|
| R26 | 2.32K/0.1% |
| R27, R28, R29, R30, R44 | 10K |
| R31, R32, R33, R34, R35, R45 | 100K |
| R36, R37, R38, R39, R40, R41, R42 | 25K |
| R43 | 47K |
| R46 | 69.8K/1% |
| R47 | 10K/1% |
| R48 | 68K |
| U5, U7 | CD4051B |
| U6 | LM324 |
| U8 | TSC500 |

## FIGURES 6 and 7

| | |
|---|---|
| C20, C21 | 15pF/50V |
| C22, C23, C24, C25 | 0.1/50V |
| C26 | 1/50V LL |
| C27 | 3.3/50V LL |
| D8, D9 | 1N 4148 |
| E1 | |
| E2 | |
| R49, R63, R66, R73, R74, R75, R76, R77, R78, R79, R80 | 10K |
| R50, R51, R52, R64, R69, R72 | 47K |
| R53, R54, R55, R56, R81, R82, R83, R84, R85, R86, R87, R88 | 27K |

| | |
|---|---|
| R57, R58, R59 | 4.7K |
| R60, R61, R62, R67, R70, R71 | 270K |
| R65, R68 | 470K |
| | |
| U3 | CA3290 |
| U4 | 74HC04 |
| U6 | LM324 |
| U9 | |
| | |
| Y-1 | 4.91520MHZ |

FIGURES 8 and 9

| | |
|---|---|
| C28, C29 | 47/16V LL |
| C30, C31 | 0.001/50V |
| C35 | 0.1/50V |
| | |
| D10, D11 | 1N4148 |
| | |
| Q3 | 2N3906 |
| Q4, Q5, Q6, Q7 | 4AMP/200V |
| Q8, Q9 | 2N3904 |
| | |
| R89, R90, R91, R92, R101, R102 R103, R104, R109 | 47K |
| | |
| R94, R95, R96, R97 | 220 |
| | |
| R98 | 820 |
| R99 | 560 |
| R100 | 51 |
| R105, R115 | 10K/1% |
| R107, R110, R117, R120 | 470 |
| R108, R118 | 26.1K/1% |
| R111, R121 | 22 |
| R112, R119, R122 | 4.7K |
| R113, R123 | 100K |
| R114, R124 | 10K |

# 0 248 380

|          |         |
|----------|---------|
| U10      | 74HC04  |
| U11, U11(A) | LM324 |
| U11(B)   |         |

Other information which may be useful in applying and installing the apparatus 10 is attached as Appendices I-III.

While only a few embodiments of the inventive apparatus have been shown and described, it is not intended to be limited thereby but only by the scope of the claims which follow.

## Claims

1. Apparatus for controlling a variable air volume unit and including:

an electrical supply for powering said apparatus;

a microcomputer connected to said supply for controlling the operation of said apparatus;

multiplexing means connected to said microcomputer and to a plurality of first input terminals for providing a group of first signals to said microcomputer which are representative of the values of sensors connected to said first terminals;

said multiplexing means being further connected to a plurality of second input pins for providing a group of second signals to said microcomputer which are representative of the values of setpoint potentiometers connected to said second pins;

an analog-to-digital converter connected to said microprocessor for providing digital data signals thereto, and;

an output section connected to said microprocessor for controlling said unit;

said sensors including at least one sensor for indicating the flow rate of air being discharged from said unit;

said potentiometers including a first potentiometer disposed remotely from said apparatus for setting a temperature to be maintained within a space.

2. The invention set forth in Claim 1 wherein said output section includes at least one power-controlling device for adjusting the flow rate of air being discharged from said unit between a minimum flow rate and a predetermined maximum flow rate.

3. Apparatus for controlling a variable air volume unit and including:

an electrical supply for providing power at a plurality of voltages to said apparatus;

a microcomputer connected to said supply for controlling the operation of said apparatus;

a first multiplexer connected between said microcomputer and a plurality of sensor input terminals, said terminals being connectable to sensors including a first sensor for indicating the flow rate of air being discharged from said unit and a second sensor for indicating the air temperature within a space;

a second multiplexer connected between said microcomputer and a plurality of setpoint input pins, said pins being connectable to setpoint potentiometers including a first potentiometer for setting a temperature to be maintained within a space and a second potentiometer for adjusting the minimum flow rate of air to be discharged from said unit;

an analog-to-digital converter connected to and controlled by said microprocessor for providing digital data signals thereto, said data signals being representative of the analog values of said sensors and said setpoint potentiometers, and;

an output section connected to said microprocessor for controlling said unit, said output section including at least two triacs for controllably energizing a damper actuator to adjust the flow rate of air being discharged from said unit.

4. The invention set forth in Claim 3 wherein said output section further includes a pulse width modulated source of substantially constant current for powering a resistance heater.

5. The invention set forth in Claim 4 wherein said apparatus further includes a section for providing an analog voltage output, said section including means for limiting the maximum current available therefrom.

6. The invention set forth in Claim 5 wherein said analog-to-digital converter attenuates AC power line noise by integrating said analog values over a predetermined fraction of a second, the denominator of said fraction being equal to the power line frequency in Hertz and the numerator of said fraction being an integer.

12

7. The invention set forth in Claim 6 wherein said apparatus is connectable to a digital communication bus for supervisory control by a computer at a higher hierarchical level.

8. Apparatus for controlling a variable air volume unit and including:

an electrical supply for powering said apparatus;

a microcomputer connected to said supply for controlling the operation of said apparatus;

multiplexing means connected to said microcomputer and to a plurality of first input terminals for providing a group of first signals to said microcomputer which are representative of the values of sensors connected to said first terminals.

said multiplexing means being further connected to a plurality of second input pins for providing a group of second signals to said microcomputer which are representative of the values of setpoint potentiometers connected to said second pins;

an analog-to-digital converter connected to said microprocessor for providing digital data signals thereto, said data signals being the result of the integration of analog values over a fraction of a second and;

an output section connected to said microprocessor for controlling said unit, said output section including at least two triacs gated to conduction by a gating pulse having a duration significantly less than the duration of one-half cycle of the voltage being controlled by said triacs.

9. The invention set forth in Claim 8 wherein said output section further includes a proportional current portion and an analog voltage portion for providing a variable output voltage, said voltage portion having a current foldback feature for overload protection.

FIG. 1

FIG. 10

0 248 380

FIG. 2

0 248 380

FIG. 3

0 248 380

FIG. 4

FIG.5

0 248 380

FIG. 6

0 248 380

FIG. 7

FIG. 8

FIG. 9

_FIG. 11_

_FIG. 12_